Europäisches Patentamt

European Patent Office

Office européen des brevets

(11) Publication number: **0 154 366**
**B1**

## EUROPEAN PATENT SPECIFICATION

(45) Date of publication of patent specification: **27.07.88**

(51) Int. Cl.⁴: **H 04 M 1/60**

(21) Application number: **85200181.7**

(22) Date of filing: **12.02.85**

(54) Audio transmission circuit comprising a transmit amplifier in the form of a line voltage stabiliser.

(30) Priority: **17.02.84 NL 8400508**

(43) Date of publication of application:
**11.09.85 Bulletin 85/37**

(45) Publication of the grant of the patent:
**27.07.88 Bulletin 88/30**

(84) Designated Contracting States:
**BE DE FR GB IT SE**

(56) References cited:
**WO-A-79/00295**
**US-A-4 233 474**

**IEEE JOURNAL OF SOLID-STATE CIRCUITS,
vol. SC-17, no. 6, December 1982, pages
1149-1157; P. CONSIGLIO et al.: "A
programmable speech circuit suitable for
telephone transducers"**

(73) Proprietor: **N.V. Philips' Gloeilampenfabrieken**
**Groenewoudseweg 1**
**NL-5621 BA Eindhoven (NL)**

(72) Inventor: **Sijbers, Peter Johannes Maria**
**c/o INT. OCTROOIBUREAU B.V. Prof. Holstlaan 6**
**NL-5656 AA Eindhoven (NL)**
Inventor: **Otten, Henricus Johannes Maria**
**c/o INT. OCTROOIBUREAU B.V. Prof. Holstlaan 6**
**NL-5656 AA Eindhoven (NL)**
Inventor: **van der Plaats, Petrie Johan**
**c/o INT. OCTROOIBUREAU B.V. Prof. Holstlaan 6**
**NL-5656 AA Eindhoven (NL)**
Inventor: **Dorland, Hendrikus Anthony Herman**
**c/o INT. OCTROOIBUREAU B.V. Prof. Holstlaan 6**
**NL-5656 AA Eindhoven (NL)**

(74) Representative: **De Jongh, Cornelis Dominicus**
**et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to an audio transmission circuit for a telephone set which is fed with line direct voltage *via* the subscriber line, comprising a high-output impedance microphone pre-amplifier and a transmit amplifier which is in the form of a line voltage stabiliser and includes an input stage constituted by a fed-back operational amplifier and includes an output stage which is formed by an output transistor and an associated emitter resistor, which output stage is arranged in parallel with the subscriber line, a signal input of the operational amplifier being connected to the output of the microphone pre-amplifier, and the transmit amplifier further comprising a reference voltage source for producing a reference voltage for line voltage stabilisation.

Such an audio transmission circuit is disclosed in the article "A programmable Speech Circuit Suitable for Telephone Transducers", IEEE Journal of Solid-State Circuits, Vol. Sc—17, No. 6, December 1982, pages 1149—1157.

In operation, a telephone set connected to a subscriber line of a public telephone network receives from the telephone exchange *via* this subscriber line a line voltage which is formed by a d.c. voltage component, the line d.c. voltage, and an a.c. voltage component, the receiving signal. In addition, the line d.c. voltage is modulated with the signal to be transmitted by the telephone set, the transmission signal.

The administrations prescribe a maximum direct voltage across the set, which maximum direct voltage further depends on the line current. A typical value for the maximum line direct voltage is, for example, 5.7 V at a 10 mA line current. In the telephone set the line direct voltage is set by a voltage stabiliser which may form part of the transmit amplifier.

The audio transmission circuit described in said IEEE article comprises a transmit amplifier which not only stabilises the line d.c. voltage but is also included in a Wheatstone-bridge for producing the anti-sidetone effect and with which in addition the desired line terminating impedance can be actively realised. The properties of the audio transmission circuit as regards the above-mentioned functions are determined by passive components, which also determine the gain of the transmit amplifier. Consequently, it is not easy to increase this gain in a simple way without adversely affecting the other properties of the audio transmission circuit.

The invention has for its object to provide a novel concept of the audio transmission circuit as set forth in the opening paragraph, in which the gain of the transmit amplifier is determined by a component which does not affect the further properties of the audio transmission circuit.

So as to accomplish this object, the audio transmission circuit according to the invention, is characterized in that:
— a voltage divider which is formed by a first resistor and a parallel arrangement of a resistance and a capacitor, the emitter resistor forming part of the resistance, is arranged in parallel with the subscriber line,
— the signal input of the operational amplifier is connected to the emitter of the output transistor *via* a feedback circuit which comprises the reference voltage source and a feedback resistor,
— and the other input of the operational amplifier is connected to the junction of the first resistor and the resistance.

Because of the configuration of components which determine the properties of the transmit amplifier and of the line voltage stabiliser opted for it is achieved that the gain of the transmit amplifier only depends on the value of the feedback resistor. When the audio transmission circuit is realized in integrated form, it is now only necessary to provide one single resistor, namely the feedback resistor, as an external component outside the integrated circuit to realize a variable gain.

Since in the transmission circuit according to the invention the line terminating impedance is not actively realized with the aid of the transmit amplifier, the availability of a feed point from which all the other circuits of the audio transmission circuit can be fed is obtained as an additional advantage. Namely, it is now possible to form the line terminating impedance separately by the series arrangement of a line terminating resistor and a supply capacitor for blocking the direct. current. The junction between the line terminating resistor and the supply capacitor can now be used as a direct current feed point, as substantially no a.c. voltage is present any more across the supply capacitor.

Microphone pre-amplifiers in audio transmission circuits often produce an output direct current without an input signal being present, commonly denoted as the offset current. Such offset currents are the result of, for example, spread in the properties of the components forming the circuit, or of temperature fluctuations. A microphone pre-amplifier in the integrated form having a carefully constructed differential input stage can still produce an offset current of the order of magnitude of 1 μA.

In the audio transmission circuit according to the invention, in which the microphone pre-amplifier is connected to a highly resistive input of the transmit amplifier, the offset current produces a direct voltage — the offset voltage — across the feedback resistor. This offset voltage in the feedback circuit constitutes to all appearances a deviation from the reference voltage for the line voltage stabilisation, so that a deviation of the line direct voltage is produced.

When a forward-biased diode is used as a voltage reference circuit the reference voltage is, for example, 0.6 V. A possible value of the feedback resistor is 180 kΩ, so that for an offset current of 1 μA an offset voltage of 0.18 V is produced. So in the above numerical example a spread of approximately 30% may occur in the line direct voltage at an in all other respects constant line direct current of a small value.

The administrations prescribe that the line direct voltage shall not exceed a predetermined value, for example 5.7 V. When a conventional diode bridge is used across which there is a voltage of 1.5 V, the voltage across the audio transmission circuit must not exceed 4.2 V. As a highest possible line direct voltage is desired for the design of the several components of an audio transmission circuit, it is important to keep the spread in the line direct voltage as small as possible.

An embodiment of the audio transmission circuit in accordance with the invention having a reduced spread of the line direct voltage, is characterized in that the reference voltage source is formed by at least two diodes which are arranged in series in the same sense and are forward biased.

This measure reduces the relative variation in the direct voltage in the feedback circuit because of the offset current of the microphone amplifier by a factor which is equal to the number of diodes in the feedback circuit.

An embodiment of the audio transmission circuit in accordance with the invention, which has the advantage that any temperature fluctuations of the reference voltage source can be compensated for in a simple way, is characterized in that the transmit amplifier comprises a current source producing a load independent current and having a temperature coefficient whose sign is opposite to the sign of the temperature coefficient of the reference voltage source, which current source is arranged in parallel with the capacitor of the voltage divider.

With a suitable dimensioning of the resistance of the voltage divider, a decrease for example of the reference voltage is compensated for by an increase in the voltage drop across the first resistor in response to an increase in current of the current source.

The invention will now be described in greater detail by way of example with reference to the accompanying Figures, in which corresponding components of the various Figures are given the same reference numerals. Herein:

Figure 1 shows an audio transmission circuit comprising a transmit amplifier in accordance with the invention and

Figure 2 shows an audio transmission circuit, comprising a transmit amplifier in accordance with the invention, having a construction which is particularly suitable for reducing the spread in the line voltage values.

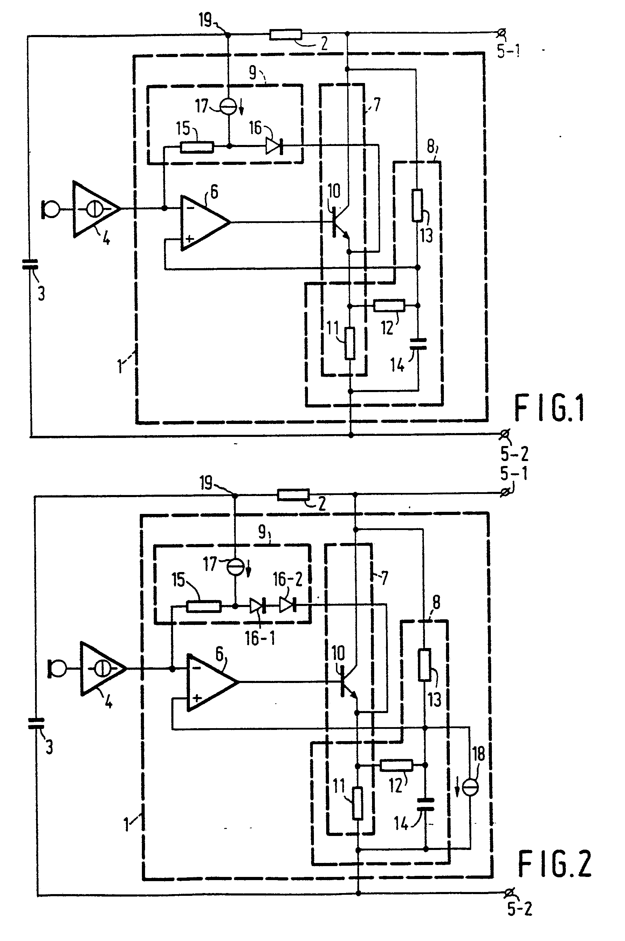

The audio transmission circuit shown in Figure 1 is formed by a transmit amplifier 1 which also serves as a line voltage stabiliser a line terminating resistor 2 having a resistance value of, for example, 600 Ω, a supply capacitor 3 having a capacitance of, for example, 10 µF and a microphone pre-amplifier 4 connected to the signal input of the transmit amplifier. This microphone pre-amplifier has a high input impedance and is therefore symbolically shown as an amplifier having a current source with a load-independent current. Together with the supply capacitor 3 the line terminating resistor 2 forms a series arrangement which is connected to the subscriber line terminals 5—1 and 5—2 *via* a conventional diode bridge, which is not shown in the Figure. The junction point 19 of line terminating resistor and supply capacitor 3 forms a direct voltage feedpoint having a highly attenuated a.c. voltage component.

Transmit amplifier 1 is formed by an operational amplifier 6, an output stage 7 having a two-terminal output, a voltage divider 8 and a feedback circuit 9. The output stage 7 is connected to the subscriber line terminals 5—1 and 5—2.

Operational amplifier 6 is connected by means of its inverting input to microphone pre-amplifier 4. The output of the operational amplifier 6 is connected to the base of an output transistor 10, whose emitter is connected to an emitter resistor 11 having, for example, a value of 20 Ω. Output transistor 10 and emitter resistor 11 together form the output stage 7.

Voltage divider 8 is formed by a capacitor 14 of, for example, 2 µF and a series arrangement of a resistor 13 of, for example, 110 kΩ, a 20 kΩ resistor 12 and resistor 11, capacitor 14 being arranged in parallel with the two last-mentioned resistors. The series arrangement of the resistors 11, 12 and 13 is connected to the subscriber line terminals 5—1 and 5—2. The non-inverting input of operational amplifier 6 is connected to the junction of resistor 12 and resistor 13.

Feedback circuit 9 is formed by a feedback resistor 15 of, for example, 180 kΩ, a diode 16, whose anode is connected to resistor 15 and a constant current source 17, which is connected to the junction between feedback resistor 15 and diode 16 and biases the diode 16 in the forward direction. The other side of current source 17 is connected to supply point 19.

An input signal current applied by microphone pre-amplifier 4 to the input of transmit amplifier 1 produces an output signal current through transistor 10. The input signal current flows substantially wholly through feedback resistor 15 because the input of operational amplifier 6 has a high impedance; the output signal current flows substantially wholly through emitter resistor 11 because the latter is of a much smaller value than the series arrangement of resistor 12 and capacitor 14 which are in parallel with said emitter resistor. The current gain of transmitter stage 1 must be understood to mean the ratio of the output signal current to the input signal current.

Because capacitor 14 shows substantially no impedance to signal current, substantially no signal impedance appears at the non-inverting input of operational amplifier 6 and consequently, because of the high gain, neither at the inverting input. The signal voltages across feedback resistor 15 and emitter 11 are consequently equal, so that the current ratio, *i.e.* the current gain of transmitter stage 1, is equal to the ratio between the resistors 15 and 12. For said numerical examples the current gain is consequently 9000 (79 dB).

The line direct voltage which is set by the transmit amplifier 1 which operates as a voltage stabiliser depends on the values of the different components in the following way. The voltage across capacitor 14, the voltage at the non-inverting input and the voltage at the inverting input of operational amplifier 6 are mutually equal. Since no direct current flows through feedback resistor 15 in the case of a zero value input direct current, the emitter voltage of transistor 10 is one diode forward voltage $V_d$ lower than said voltages. The voltage across resistor 12, whose resistance value is denoted by $R_{12}$ is consequently also equal to the diode voltage $V_d$, whilst the voltage across resistor 13, whose value is denoted by $R_{13}$ is $R_{13}/R_{12}$ times larger.

The line direct voltage is the sum of the voltages across the resistors 13 and 12 and across the emitter resistor 11, whose value is denoted by $R_E$. The direct voltage across resistor 11 is substantially equal to the product of the value of resistor 11 and the line direct current $I_1$, as only a small portion of the line direct current flows through resistor 2. Thus it is found that for the line direct voltage $V_1$ it holds that:

$$V_1 = I_1 R_E + (1 + \frac{R_{13}}{R_{12}}) V_d \quad (1)$$

using the afore mentioned numerical examples, this expression results in a line direct voltage of 4.2 V for a 15 mA line direct current and a 0.6 V diode voltage.

The output stage 7 of the transmit amplifier 1, which operates as a voltage stabiliser must have for a.c. voltage signals in the audio frequency range an adequately high impedance to prevent as much as possible the line terminating impedance from being influenced. This indispensable high impedance is obtained because capacitor 14 and resistors 11 and 13 together with operational amplifier 6, seen from terminal 5—1 and 5—2 behave as an inductor. The value of this apparent inductance is equal to the product of the value of resistor 11, the value of resistor 13 and the capacitance of capacitor 14. With the said numerical examples the value of this apparent inductance appeared to be approximately 4.4 H.

The high value of the current gain, 79 dB, of transmit stage 1 is realized by choosing the value of the feedback resistor 15 to be adequately high. As now the whole offset current of, for example, 1 µA of microphone pre-amplifier 4 flows through feedback resistor 15, the high resistance value thereof produces an offset voltage of, for example, 0.18 V across feedback resistor 15, which is undesirable in certain circumstances.

The spread produced by the offset voltage in the line direct voltage to be set by the voltage stabiliser would force the designer to choose a low nominal value of the direct voltage to be set, so as to always satisfy the maximum value requirements of the line direct voltage imposed by the administrations, or to choose a much lower gain of transmit stage 1. A low gain is undesirable as this would greatly limit the fields of application of the audio transmission circuit. When a low nominal value is chosen for the line direct voltage, the value of the line direct voltage may in adverse cases result in a value which is an amount equal to the spread lower than the nominal value chosen by the designer, which value is already low. With said numerical examples it was found that at a maximum line direct voltage of 4.2 V the nominal line direct voltage must be designed to have a value of 3.0 V, it being possible for the line direct current to assume a value of 1.8 V in the case of a disadvantageous value and direction of the offset current. This low value may be objectionable for, for example, feeding further electronic circuits of the audio transmission circuit.

Figure 2 shows an embodiment of the audio transmission circuit according to the invention in which the above-described problem as regards the spread is solved, and in which also the influence of temperature fluctuations on the diode voltage of the reference voltage diode 16 is reduced.

Replacing in Figure 1 diode 16 by two series-arranged diodes 16—1 and 16—2 and by adding a load independent current source 18 in parallel with capacitor 14 results in the circuit diagram of audio transmission circuit shown in Figure 2. These alterations make an adaptation of the dimension of transmit amplifier 1 necessary. The resistor 13 now has a value of, for example, 16 kΩ, whilst resistor 12 has a value of, for example, 21.5 kΩ.

The diodes 16—1 and 16—2 are biased in the forward direction by current source 17. Current source 18 has a temperature coefficient of the current which compensates for the influence of the temperature coefficient of the diode voltage and the line direct voltage. The effect of the presence of current source 18 on the line direct voltage may be expressed by adding an extra term to formula (1) equal to the magnitude of the product of the resistance value $R_{13}$ of resistor 13 and the current $I_o$ through current source 18.

The expression for the line direct voltage $V_1$ now becomes:

$$V_1 = I_1 R_E + 2 (1 + \frac{R_{13}}{R_{12}}) V_d + I_o R_{13} \quad (2)$$

In formula (2) the adapted values of $R_{12}$ and $R_{13}$ must now be filled up. The coefficient of the reference voltage $2V_d$ in the above formula now gets a value of approximately 1.75.

When the offset voltage across resistor 15 is not changed, the influence of this offset voltage on the spread in the line direct voltage is reduced by a factor of approximately 3.7 because the coefficient of $V_d$ in formula (1) decreased by the same factor. Consequently, the spread in the line d.c. voltage has got an acceptable value.

A current which does not depend on the load of a current source flows through the current source 18. This current is directly proportional to the temperature with a positive temperature coefficient. Sources of this type are known *per se*, for example, from the article "Integrated linear basic circuits", Philips Technical Review, Vol. 32, 1971, No. 1. By a suitable choice of the value of the resistors 12 and 13 it is now accomplished that the effect of the positive temperature coefficient of current source 18 on the line direct voltage just compensates for the effect of the negative temperature coefficient of the diodes 16—1 and 16—2.

### Claims

1. An audio transmission circuit for a telephone set which is fed with line direct voltage *via* the subscriber line, comprising a high-output impedance microphone pre-amplifier (4), and a transmit amplifier (1) which is in the form of a line voltage stabiliser and includes an input stage constituted by a fed-back operational amplifier (6) and includes an output stage which is formed by an output transistor (10) and an associated emitter resistor (11) which output stage is arranged in parallel with the subscriber line, a signal input of the operational amplifier (6) being connected to the output of the microphone pre-amplifier (4), and the transmit amplifier (1) further comprising a reference voltage source (16) for producing a reference voltage for line voltage stabilisation, characterized in that
— a voltage divider (8) which is formed by a first resistor (13) and a parallel arrangement of a resistance (11, 12) and a capacitor, the emitter resistor (11) forming part of the resistance, is arranged in parallel with the subscriber line,
— that the signal input of the operational amplifier (6) is connected to the emitter of the output transistor (10) *via* a feedback circuit (9) which comprises the reference voltage source (16) and a feedback resistor (15),
— and that the other input of the operational amplifier is connected to the junction of the first resistor (13) and the resistance (11, 12).

2. An audio transmission circuit as claimed in Claim 1, characterized in that the reference voltage source is formed by at least two diodes (16—1, 16—2) which are arranged in series in the same sense and are forward biased.

3. An audio transmission circuit as claimed in Claim 1 or 2, characterized in that the transmit amplifier (1) comprises a current source (18) producing a load-independent current and having a temperature coefficient whose sign is opposite to the sign of the temperature coefficient of the reference voltage source, which current source is arranged in parallel with the capacitor (11) of the voltage divider.

### Patentansprüche

1. Audio-Uebertragungsschaltung für einen Fernsprechapparat, der über die Teilnehmerleitung mit Leitungsgleichstrom gespeist wird, mit einem Mikrophonvorverstärker (4) mit hoher Ausgangsimpedanz und mit einem Sendeverstärker (1) in Form eines Leitungsspannungsgleichhalters mit einer Eingangsstufe, die durch einen rückgekoppelten Operationsverstärker (6) gebildet ist und mit einer Ausgangsstufe, die durch einen Ausgangstransistor (10) und einen zugeordneten Emitterwiderstand (11) gebildet ist, wobei diese Ausgangsstufe parallel zu der Teilnehmerleitung liegt, wobei ein Signaleingang des Operationsverstärkers (6) mit dem Ausgang des Mikrophonvorverstärkers (4) verbunden ist und wobei der Sendeverstärker (1) weiterhin eine Bezugsspannungsquelle (16) zum Erzeugen einer Bezugsspannung zur Leitungsspannungsstabilisierung aufweist, dadurch gekennzeichnet, dass
— ein Spannungsteiler (8), der durch einen ersten Widerstand (13) und eine Parallelschaltung eines zweiten Widerstandes (11, 12) und eines Kondensators gebildet wird, wobei der Emitterwiderstand (11) einen Teil des Widerstandes bildet, parallel zu der Teilnehmerleitung angeordnet ist,
— der Signaleingang des Operationsverstärkers (6) über eine die Bezugsspannungsquelle (16) und eine Rückkopplungswiderstand (15) aufweisende Rückkopplungsschaltung (9) mit dem Emitter des Ausgangstransistors (10) verbunden ist und dass
— der andere Eingang des Operationsverstärkers mit dem Knotenpunkt des ersten Widerstandes (13) und des zweiten Widerstandes (11, 12) verbunden ist.

2. Audio-Uebertragungsschaltung nach Anspruch 1, dadurch gekennzeichnet, dass die Bezugsspannungsquelle durch wenigstens zwei Dioden (16—1, 16—2) gebildet wird, die in Reihe in demselben Sinn vorgesehen und in Vorwärtsrichtung vorgespannt sind.

3. Audio-Uebertragungsschaltung nach Anspruch 1 oder 2, dadurch gekennzeichnet, dass der Sendeverstärker (1) eine Stromquelle (18) aufweist, die einen belastungsunabhängigen Strom erzeugt und einen Temperaturkoeffizienten aufweist, dessen Vorzeichen dem des Temperaturkoeffizienten der Bezugsspannungsquelle entgegengesetzt ist, wobei diese Stromquelle parallel zu dem Kondensator (11) des Spannungsteilers vorgesehen ist.

### Revendications

1. Circuit de transmission audio pour un appareil téléphonique qui est alimenté au moyen d'une tension continue de ligne par l'intermédiaire de la ligne d'abonné, comprenant un préamplificateur de microphone à haute impédance de sortie (4) et un amplificateur de transmission (1) qui a la forme d'un stabilisateur de tension de ligne et comprend un étage d'entrée constitué par un amplificateur opérationnel à réaction (6) et comprend un étage de sortie qui est formé par un transistor de sortie (10) et une résistance d'émetteur associée (11), cet étage de sortie étant disposé en parallèle avec la ligne d'abonné, une entrée de signal de l'amplificateur opérationnel (6) étant connectée à la sortie du préamplificateur de microphone (4), et l'amplificateur de transmission (1) comprenant, en outre, une source de tension de référence (16) pour produire une tension de référence pour la stabilisation de la tension de ligne, caractérisé en ce que:

— un diviseur de tension (8) qui est formé par une première résistance (13) et un montage en parallèle d'un élément résistif (11, 12) et d'un condensateur, la résistance d'émetteur (11) faisant partie de l'élément résistif, est disposé en parallèle avec la ligne d'abonné,

— l'entrée de signal de l'amplificateur opérationnel (6) est connectée à l'émetteur du transistor de sortie (10) par l'intermédiaire d'un circuit de réaction (9) qui comprend la source de tension de référence (16) et une résistance de réaction (15),

— et l'autre entrée de l'amplificateur opérationnel est connectée à la jonction de la première résistance (13) et de l'élément résistif (11, 12).

2. Circuit de transmission audio suivant la revendication 1, caractérisé en ce que la source de tension de référence est formée par au moins deux diodes (16—1, 16—2) disposées en série dans le même sens et polarisées en sens passant.

3. Circuit de transmission audio suivant la revendication 1 ou 2, caractérisé en ce que l'amplificateur de transmission (1) comprend une source de courant (18) produisant un courant indépendant de la charge et ayant un coefficient de température dont le signe est opposé au signe du coefficient de température de la source de tension de référence, cette source de courant étant disposée en parallèle avec le condensateur (14) du diviseur de tension.

FIG.1

FIG.2